# EUROPEAN PATENT APPLICATION

(11) **EP 4 767 820 A1**
(43) Date of publication of application: **01.07.2026**
(21) Application number: 24860575.0
(22) Date of filing: 16.08.2024
(51) Int. Cl.: A01K 1/02

(54) **PET CAGE**

(30) Priority: 25.08.2023 US 202363578747 P
(71) Applicant: Jani International Pte. Ltd., Singapore 569874 (SG)
(72) Inventor: CHENG, Chinming, Taipei 114, Taiwan (CN)
(74) Representative: Müller-Boré & Partner Patentanwälte PartG mbB
(86) International application number: PCT/SG2024/050526
(87) International publication number: WO 2025/048712

(57) **Abstract**

Provided in the present application is a pet cage (1000). The pet cage (1000) is connected to a first end (41) of at least one traction cable (400), a second end (42) of the at least one traction cable (400) being provided with a connecting member (43), and the connecting member (43) being adapted to connect to an anchoring point (912) within a trunk (910) of a vehicle. (Figure 1)

## Description

### CROSS-REFERENCE TO RELATED APPLICATIONS

This application claims the benefit of U.S. Provisional Patent Application No. 63/578,747, filed on August 25, 2023, and titled "PET CAGE", the entire contents of which are hereby incorporated by reference.

### TECHNICAL FIELD

This application relates to a pet cage.

### BACKGROUND

A pet cage provides convenience for users to carry pets out. When the user travels by a vehicle, the pet cage is generally placed in a space behind rear seats of the vehicle. When the vehicle encounters an emergency brake due to an accident, the pet cage will move forward under an inertial action and hit an upper portion of a backrest of the rear seat, resulting in accidental forward folding of the backrest and injury to passengers.

### SUMMARY

To address the above shortcomings, this application provides a pet cage that effectively avoids accidental forward folding of the backrest and injury to the passenger caused by direct impact of the pet cage on the upper portion of the backrest when the vehicle encounters an emergency brake due to an accident.

The present application provides a pet cage. The pet cage is connected to a first end of at least one traction cable, and a second end of the at least one traction cable is provided with a connecting member adapted to be connected to an anchoring point provided in a luggage compartment of a vehicle.

Further, the pet cage is connected to two traction cables. The first ends of the two traction cables are connected to the pet cage at a position close to a top side of the pet cage, and the second ends of the two traction cables extend downward or obliquely rearward along left and right sides of the pet cage, respectively.

Further, the pet cage includes a frame structure. The frame structure includes a front frame and a rear frame both having a substantially quadrilateral shape, and a plurality of links connecting four corners of the front frame to four corners of the rear frame, and the first ends of the two traction cables are connected to two of the plurality of links close to the top side of the pet cage respectively.

Alternatively, the frame structure includes a front frame. The front frame includes a first rectangular frame, and the first rectangular frame includes a top cross bar, a bottom cross bar, and a left bar and a right bar both connected between the top cross bar and the bottom cross bar. The first ends of the two traction cables are connected to left and right sides of the top cross bar respectively.

Alternatively, the frame structure includes a front frame. The front frame includes a first rectangular frame, and the first rectangular frame includes a top cross bar, a bottom cross bar, and a left bar and a right bar both connected between the top cross bar and the bottom cross bar. The first ends of the two traction cables are connected to an upper portion of the left bar and an upper portion of the right bar respectively.

Further, the pet cage includes a frame structure. The frame structure is provided with at least one connecting base, and the at least one connecting base is connected to the first end of the at least one traction cable.

Further, the frame structure includes a front frame. The front frame includes a first rectangular frame, and the first rectangular frame includes a top cross bar, a bottom cross bar, and a left bar and a right bar both connected between the top cross bar and the bottom cross bar, and the at least one connecting base is fixed to the top cross bar, and the connecting base is bar-shaped and forms a closed loop with the top cross bar.

Further, the pet cage includes a bottom side, a top side, and a plurality of lateral sides positioned between the bottom side and the top side, and the bottom side, the top side, and the plurality of lateral sides define a receiving space of the pet cage;

The plurality of lateral sides include a front side, and the front side is inclined rearwardly with respect to the bottom side.

Further, the plurality of lateral sides further include a left side and a right side.

The bottom side, the top side, the left side, and the right side are covered by an enclosure.

Further, the plurality of lateral sides include a rear side. The rear side includes a second rectangular frame and a doorframe connected to the second rectangular frame. One side of the doorframe in a left-right direction is pivotably connected to the second rectangular frame, and another side of the doorframe in the left-right direction is locked with the second rectangular frame by a door lock.

Further, the pet cage includes a bottom side, a top side, and a plurality of lateral sides positioned between the bottom side and the top side, and the bottom side, the top side, and the plurality of lateral sides define a receiving space of the pet cage.

At least one of the bottom side, the top side, and the plurality of lateral sides include a plurality of railings, and at least some of the railings are provided with a cushioning structure having a portion positioned in the receiving space.

Further, the cushioning structure includes a cushioning sleeve surrounding at least some of the railings, and a wall thickness of a side of the cushioning sleeve facing the receiving space is greater than a wall thickness of a side of the cushioning sleeve facing away from the receiving space.

Further, the cushioning structure includes a plurality of cushioning members; the plurality of cushioning members correspond one-to-one to at least some of the railings, and each of the plurality of cushioning members incompletely covers the corresponding railing in a circumferential direction.

Further, a peripheral wall of the railing is provided with a clamping groove, and the cushioning structure includes a plurality of cushioning members; the plurality of cushioning members correspond one-to-one to at least some of the railings, and each of the plurality of cushioning members is integrally made of a cushioning material and is engaged with the corresponding clamping groove.

Further, the receiving space is provided with a separation net attached to at least some of the railings, and the cushioning structure is attached to the separation net.

Further, the cushioning structure includes a plurality of cushioning strips corresponding to at least some of the railings, and each of the plurality of cushioning strips extends in an extension direction of the corresponding railing or intersects with the extension direction of the corresponding railing.

Further, the plurality of lateral sides include a front side. The front side includes a front frame, and the front frame includes the plurality of railings and a first rectangular frame positioned outside the plurality of railings. The first rectangular frame includes a top cross bar, a bottom cross bar, and a left bar and a right bar both connected between the top cross bar and the bottom cross bar, and the left bar and the right bar are provided with an engagement member connected to the separation net.

Further, the cushioning structure includes at least one cushioning strip attached to at least some of the railings, and each of the cushioning strips is intersected with the railing to which it is attached.

Further, the cushioning structure includes at least two cushioning strips attached to at least some of the railings, and the two cushioning strips correspond to at least some of the railings and are intersected with each other.

Further, the pet cage includes a frame structure. The frame structure includes a plurality of metal tubes, and at least some of the metal tubes are provided with a cushioning structure on a side facing the receiving space.

### BRIEF DESCRIPTION OF THE DRAWINGS

To describe the technical solutions in the embodiments of this application more clearly, the following briefly introduces the accompanying drawings required for describing the embodiments. Obviously, the accompanying drawings in the following description show merely some embodiments of this application, and a person of ordinary skill in the art may still derive other drawings from these accompanying drawings without creative efforts.
FIG. 1 schematically illustrates a perspective view of a pet cage in accordance with some embodiments of the present application.
FIG. 2 schematically illustrates another perspective view of the pet cage in accordance with some embodiments of the present application.
FIG. 3 schematically illustrates a side view of the pet cage placed in a vehicle in accordance with some embodiments of the present application.
FIG. 4 schematically illustrates a side view of the pet cage and a luggage compartment of the vehicle in accordance with some embodiments of the present application.
FIG. 5 schematically illustrates a perspective view of a frame structure of the pet cage in accordance with some embodiments of the present application.
FIG. 6 schematically illustrates another perspective view of the frame structure of the pet cage in accordance with some embodiments of the present application.
FIG. 7 schematically illustrates yet another perspective view of the frame structure of the pet cage in accordance with some embodiments of the present application.
FIG. 8 illustrates a cross-sectional view along U1-U1 in FIG. 7;
FIG. 9 schematically illustrates yet another perspective view of the frame structure of the pet cage in accordance with some embodiments of the present application.
FIG. 10 illustrates a cross-sectional view along U2-U2 in FIG. 9;
FIG. 11 schematically illustrates yet another perspective view of the frame structure of the pet cage in accordance with some embodiments of the present application.
FIG. 12 illustrates a cross-sectional view along U3-U3 in FIG. 11;
FIGS. 13 and 14 illustrate variants of the cross-sectional view shown in FIG. 12;
FIG. 15 schematically illustrates yet another perspective view of the frame structure of the pet cage in accordance with some embodiments of the present application.
FIG. 16 illustrates a partial cross-sectional view along U4-U4 in FIG. 15;
FIG. 17 schematically illustrates yet another perspective view of the frame structure of the pet cage in accordance with some embodiments of the present application.
FIG. 18 schematically illustrates yet another perspective view of the frame structure of the pet cage in accordance with some embodiments of the present application.
FIG. 19 schematically illustrates yet another perspective view of the frame structure of the pet cage in accordance with some embodiments of the present application.
FIG. 20 schematically illustrates a side view of the pet cage placed in the vehicle in accordance with some embodiments of the present application.

### DETAILED DESCRIPTION OF THE EMBODIMENTS

To make the objectives, technical solutions, and advantages of this application clearer, the following describes the embodiments of this application in detail with reference to the accompanying drawings.

It should be understood that, although terms such as "first", "second", etc., may be used herein to describe various elements, these terms do not imply any order, quantity, or importance but are merely used to distinguish one component from another. These terms are only used to differentiate one element from another. For example, without departing from the scope of this application, a first element may be referred to as a second element, and similarly, a second element may be referred to as a first element. Terms such as "comprising" or "including" mean that the elements or items appearing before the term encompass the elements or items listed after the term and their equivalents, but do not exclude other elements or items. Furthermore, in the description of this application, the term "a" or "an" may include one or more items unless otherwise specified.

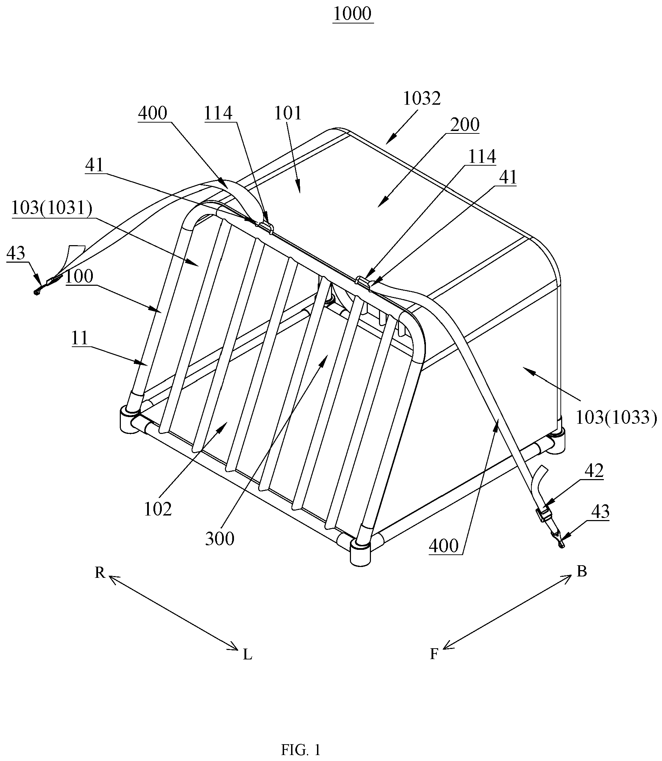

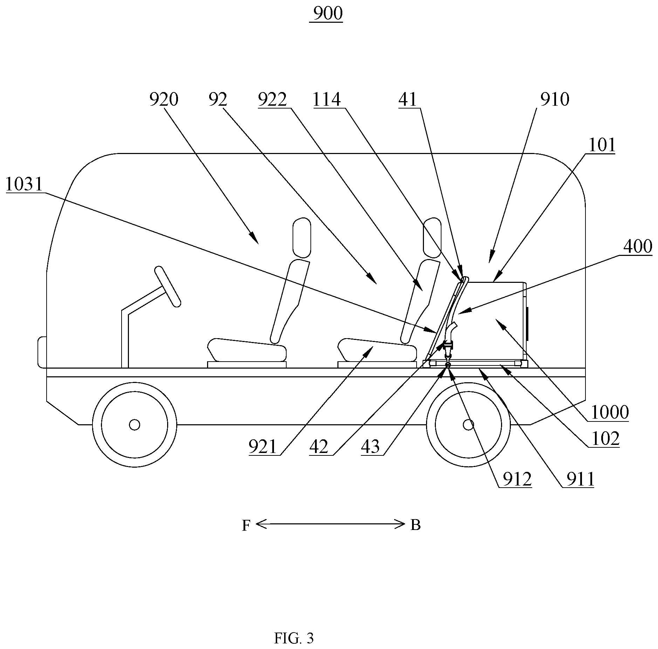

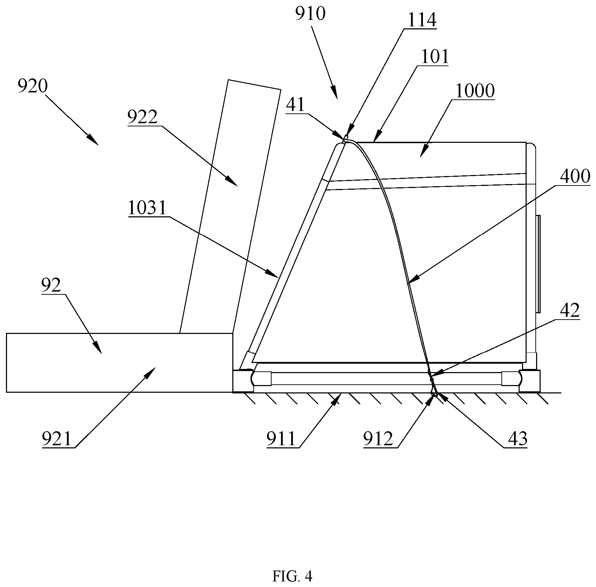

FIGS. 1-2 illustrate perspective views of a pet cage 1000 in accordance with some embodiments of the present application. FIG. 3 schematically illustrates a side view of the pet cage placed in a vehicle in accordance with some embodiments of this application. FIG. 4 schematically illustrates a side view of the pet cage and a luggage compartment of the vehicle in accordance with some embodiments of this application. Referring to FIGS. 3 and 4, the pet cage 1000 is adapted to be placed in a vehicle 900, such as an SUV or a minivan. Such a vehicle 900 is provided with a luggage compartment 910 for holding luggage behind the rear seats, the luggage compartment 910 communicates with a cabin 920 for passengers, and the pet cage 1000 can be placed on a floor 911 of the luggage compartment 910.

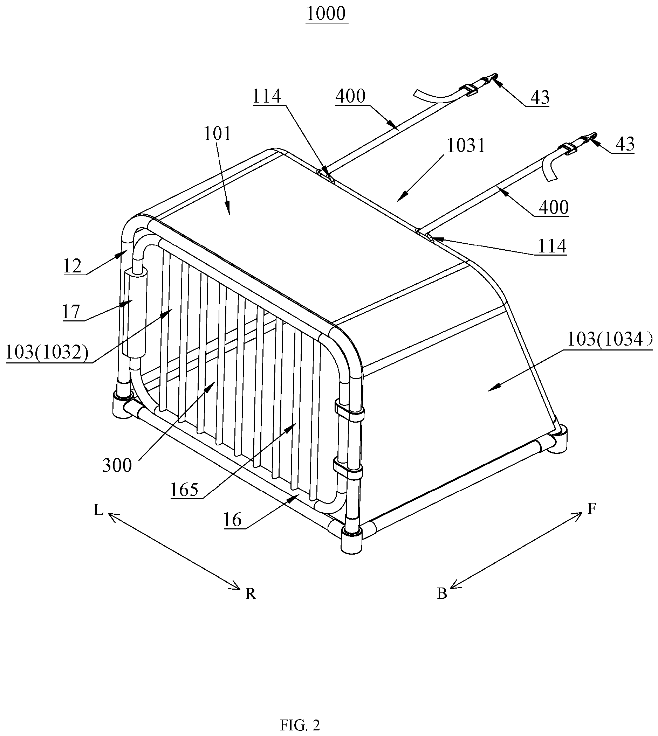

Referring to FIGS. 1 and 2, the pet cage 1000 includes a frame structure 100 and an enclosure 200 engaged with the frame structure 100. The frame structure 100 and the enclosure 200 define a top side 101, a bottom side 102, and a plurality of lateral sides 103 of the pet cage 1000. The plurality of lateral sides 103 are positioned between the bottom side 101 and the top side 102. The plurality of lateral sides 103 includes, for example, a front side 1031, a rear side 1032, a left side 1033, and a right side 1034. In addition, the frame structure 100 and the enclosure 200 enclose a receiving space 300, and a pet can be placed into the receiving space 300.

It should be noted that, unless otherwise clearly specified and defined, directional terms such as "front", "rear", "left" and "right" in embodiments of the present application are based on the "front", "rear", "left" and "right" direction of the vehicle 900 into which the pet cage 1000 is placed. In the drawings, the "front" and "rear" direction are schematically shown with arrows F and B, and the "left" and "right" direction are schematically shown with arrows L and R. These directional terms are used solely to make the description of embodiments of the present application clearer, and are not intended to unduly limit the scope of the present application.

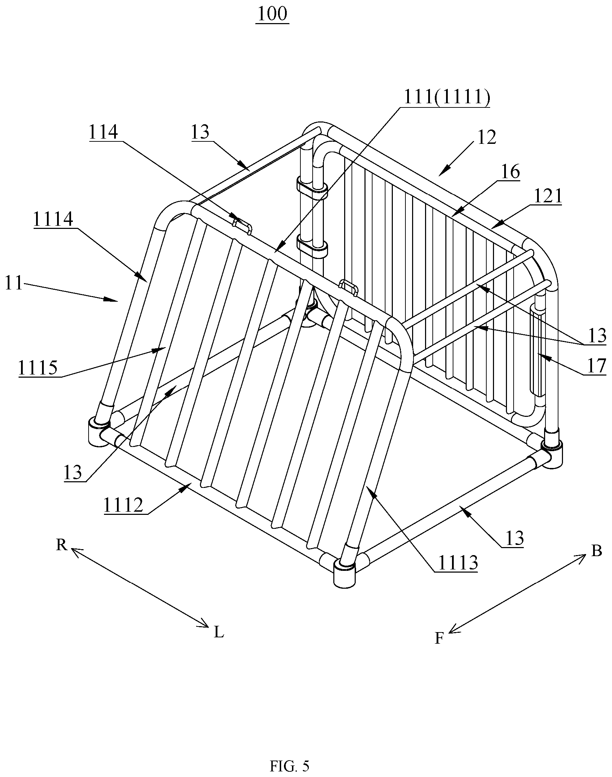

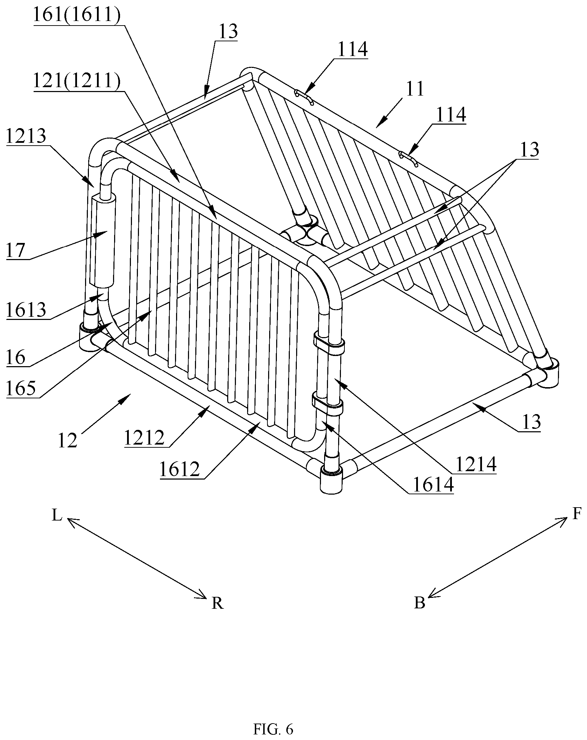

FIGS. 5 and 6 illustrate exemplary embodiments of the frame structure 100. The frame structure 100 includes, for example, a front frame 11 and a rear frame 12 that are substantially quadrilateral in shape, and a plurality of links 13 connecting four corners of the front frame 11 to four corners of the rear frame 12.

The front frame 11 includes, for example, a first rectangular frame 111 and a plurality of railings 1115 positioned within the first rectangular frame 111. The first rectangular frame 111 includes, for example, a top cross bar 1111, a bottom cross bar 1112, and a left bar 1113 and a right bar 1114 both connected between the top cross bar 1111 and the bottom cross bar 1112. In some embodiments, the plurality of railings 1115 are connected, for example, parallel to each other between the top cross bar 1111 and the bottom cross bar 1112. In other embodiments, the plurality of railings 1115 are connected, for example, parallel to each other between the left bar 1113 and the right bar 1114. The front frame 11 and the plurality of railings 1115 correspond to the front side 1031 of the pet cage 1000.

The rear frame 12 includes, for example, a second rectangular frame 121 and a doorframe 16 connected to the second rectangular frame 121. The second rectangular frame 121 includes, for example, a top cross bar 1211, a bottom cross bar 1212, and a left bar 1213 and a right bar 1214 both connected between the top cross bar 1211 and the bottom cross bar 1212. A shape of the doorframe 16 matches a shape of the second rectangular frame 121 or lies within a space defined by the second rectangular frame 121. The doorframe 16 is pivotably connected to, for example, one of the left and right bars 1213 and 1214, and may be locked with the other of the left and right bars 1213 and 1214 by a door lock 17. When the door lock 17 is unlocked, the doorframe 16 can be opened, so as to facilitate a user to place the pet into or take the pet out of the receiving space 300. The rear frame 12 corresponds to the rear side 1032 of the pet cage 1000.

In some embodiments, the doorframe 16 may include a third rectangular frame 161 and a plurality of railings 165 positioned within the third rectangular frame 161. The third rectangular frame 161 includes, for example, a top cross bar 1611, a bottom cross bar 1612, and a left bar 1613 and a right bar 1614 both connected between the top cross bar 1611 and the bottom cross bar 1612. One of the left bar 1613 and the right bar 1614 is used to be pivotably connected to the second rectangular frame 121, and the other is used to be locked with the second rectangular frame 121 by the door lock 17. In some embodiments, the plurality of railings 165 are connected, for example, parallel to each other between the top cross bar 1611 and the bottom cross bar 1612. In other embodiments, the plurality of railings 165 are connected, for example, parallel to each other between the left bar 1613 and the right bar 1614.

When the pet cage 1000 is placed in the luggage compartment 910 of the vehicle 900, the bottom side 102 is supported by the floor 911 of the luggage compartment 910. In a case of emergency braking of the vehicle or the like, the pet in the receiving space 300 is liable to collide with the front side 1031 and the rear side 1032 of the pet cage 1000. The above described structure of the front frame 11 and the rear frame 12 can withstand a large impact force, and in particular, the railing structure of the front frame 11 can effectively prevent the pet in the receiving space 300 from hitting a backrest 922 of a vehicle seat 92 after breaking through the front side 1031 of the pet cage 1000. The top side 101, the bottom side 102, the left side 1033, and the right side 1034 can be covered with the enclosure 200 made of a fabric, a metal mesh, a sheet material, or the like.

Of course, in other embodiments, the frame structure 100 may also be implemented in other implementations and is not limited to the above embodiments. For example, in some alternative embodiments, at least one of the top side 101, the bottom side 102, the left side 1033, and the right side 1034 may not be covered by the enclosure 200, but instead includes a plurality of railings as the front side 1031 or the rear side 1032. In some alternative embodiments, at least one of the front side 1031 and the rear side 1032 may be covered by the enclosure 200 without providing the railings. In some alternative embodiments, the top side 101, the bottom side 102, or either side 103 of the pet cage 1000 may include a plurality of railings and the enclosure 200 attached to the plurality of railings, and the enclosure 200 may be positioned outside and/or inside the receiving space 300. In addition, although in the above described embodiments, the doorframe 16 is provided on the rear side 1032, in some alternative embodiments, the front frame 11 of the front side 1031 may be also provided with the doorframe. Alternatively, in some alternative embodiments, the doorframe may be provided only on the front frame 11, and the rear frame 12 may not be provided with the doorframe.

Referring again to FIGS. 3 and 4, when the pet cage 1000 is placed on the floor 911 of the luggage compartment 910, the bottom of the front side 1031 of the pet cage 1000 is generally brought into abutment with the vehicle seat 92 in order to prevent the pet cage 1000 from slipping forward during emergency braking of the vehicle. The abutment position of the pet cage 1000 with the vehicle seat 92 is positioned below the backrest 922 of the vehicle seat 92, close to a seat body 921 of the vehicle seat 92. When the vehicle brakes in an emergency, the pet cage 1000 may move forward about the bottom of the front side 1031 under inertial action. As can be seen in FIGS. 3 and 4, the front side 1031 of the pet cage 1000 is inclined rearwardly with respect to the bottom side 102 such that the top of the front side 1031 of the pet cage 1000 is spaced apart from an upper portion of the backrest 922, thereby leaving space for the forward movement of the pet cage 1000, effectively avoiding accidental forward folding of the backrest 922 and injury to the passenger caused by the pet cage 1000 directly striking the upper portion of the backrest 922.

Referring to FIGS. 1, 3, and 4, in some embodiments, the pet cage 1000 can be provided with two traction cables 400 arranged symmetrically to the left and right. First ends 41 of the two traction cables 400 are connected to the pet cage 1000 at a position close to the top side 101 of the pet cage 1000, and second ends 42 of the two traction cables 400 extend downward along left and right sides of the pet cage 1000, respectively. The second end 42 of each traction cable 400 is provided with a connecting member 43, which can be connected to any suitable anchoring point 912 in the luggage compartment 910. The traction cables 400, in use, effectively prevent the pet cage 1000 from tipping forward, further preventing the pet cage 1000 from hitting the upper portion of the backrest 922 directly. In some embodiments, the traction cable 400 may be a wire rope or a webbing, the connecting member 43 may be a hook or a fastener, and the anchoring point 912 may be provided on the floor 911, a top wall, or a left or right side wall of the luggage compartment 910.

Referring to FIGS. 1, 4, and 5, in some embodiments, a connecting base 114 can be fixed to the left and right sides of the top cross bar 1111 of the first rectangular frame 111, respectively, and the first ends of the two traction cables 400 can be connected to the corresponding connecting base 114, respectively. The second ends of the two traction cables 400 may extend obliquely rearward along the left and right sides of the pet cage 1000, respectively. When the vehicle brakes in an emergency, the pet in the receiving space 300 hits the railings 1115 of the front frame 11, and an impact force received by the railings 1115 is transmitted downward and upward along the front side 1031. The force transmitted downward is transmitted to the lower portion of the seat 92 at the bottom of the front side 1031 without directly transmitting to the upper portion of the backrest 922, thereby avoiding folding of the upper portion of the backrest 922 due to excessive stress. The force transmitted upward may then be transmitted through the traction cable 400 to the anchoring point 912 in the luggage compartment 910 and thus absorbed.

Of course, in other embodiments, connecting positions of each traction cable 400 to the pet cage 1000 are not limited to the connecting base 114 on the top cross bar 1111, and each traction cable 400 may be connected to any structure proximate the top side 101 of the pet cage 1000. In some embodiments, the two traction cables 400 are connected, for example, to an upper portion of the left bar 1113 and an upper portion of the right bar 1114, respectively, or to the links 13 close to the top side 101, respectively.

In some alternative embodiments, the number of traction cables 400 provided for the pet cage 1000 is not limited to two, and the number of traction cables 400 may be one or two or more. The connection position of each traction cable 400 to the pet cage 1000 is not limited to a position close to the top side 101 of the pet cage 1000, as long as each traction cable 400 can effectively prevent the pet cage 1000 from tipping forward when in use.

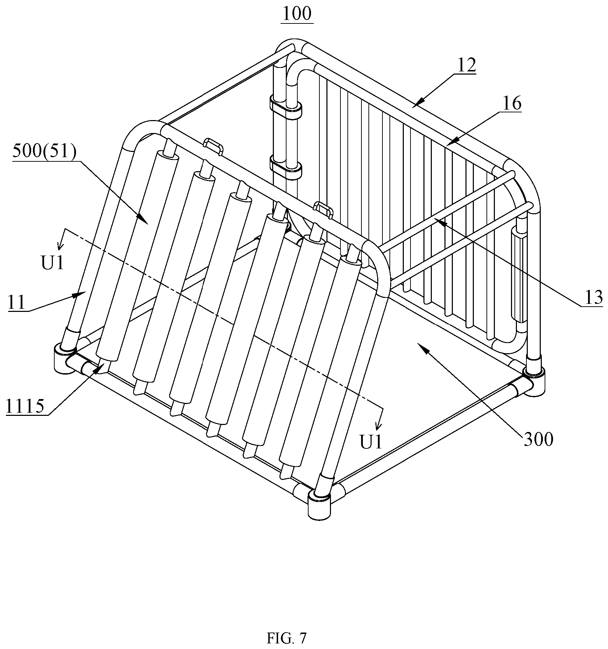

Referring to FIGS. 5 and 6, various bars (including the railing 1115 and the railing 165) of the frame structure 100 of the pet cage 1000 can be made of metal tubes. Material of the metal tubes can be, for example, but not limited to high strength aluminum tubes or iron tubes. When the vehicle brakes in an emergency, the pet in the receiving space 300 may strike the frame structure 100 directly, and such an impact may easily cause injury to the pet. Referring to FIGS. 7-19, in some embodiments, one side of the metal tube of the frame structure 100 facing the receiving space 300 may be provided with a cushioning structure 500 for reducing damage to the pet caused by the impact. In some embodiments, cushioning structure 500 is provided, for example, on railings 1115 and/or railings 165, which are most susceptible to impact with pets.

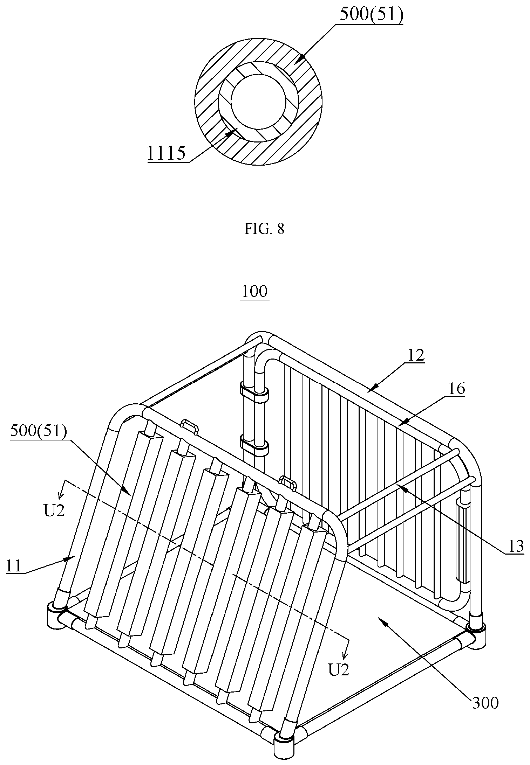

FIGS. 7 and 8 illustrate an exemplary embodiment of the cushioning structure 500 provided, for example, on the railings 1115. More specifically, the cushioning structure 500 includes a plurality of cushioning sleeves 51 surrounding the plurality of railings 1115. The cushioning sleeve 51 can be made of a cushioning material. The cushioning sleeve 51 can be sleeved on or overmolded with the railing 1115. In some embodiments, the cushioning sleeve 51 has a uniform wall thickness. It will be appreciated that, in some embodiments, the number of cushioning sleeves 51 may be less than the number of railings 1115, and the cushioning sleeves 51 may surround one central railing 1115, or two or more than two central railings 1115 due to high impact frequency of the central railings 1115 and the pet.

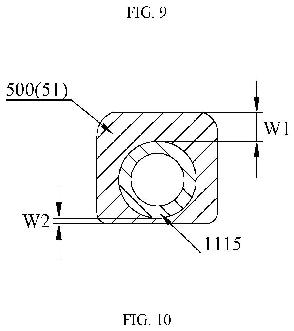

FIGS. 9 and 10 illustrate some exemplary embodiments of the cushioning structure 500. This differs from the embodiment shown in FIGS. 7 and 8 in that the wall thickness of the cushioning sleeve 51 is not uniform, and a cross sectional shape of the cushioning sleeve 51 is varied. Specifically, the wall thickness W1 of a side of the cushioning sleeve 51 facing the receiving space 300 is larger than the wall thickness W2 of a side of the cushioning sleeve 51 facing away from the receiving space 300. It should be noted that, a configuration of an outer profile of the cushioning sleeve 51 can be circular, rectangular or any other suitable shape.

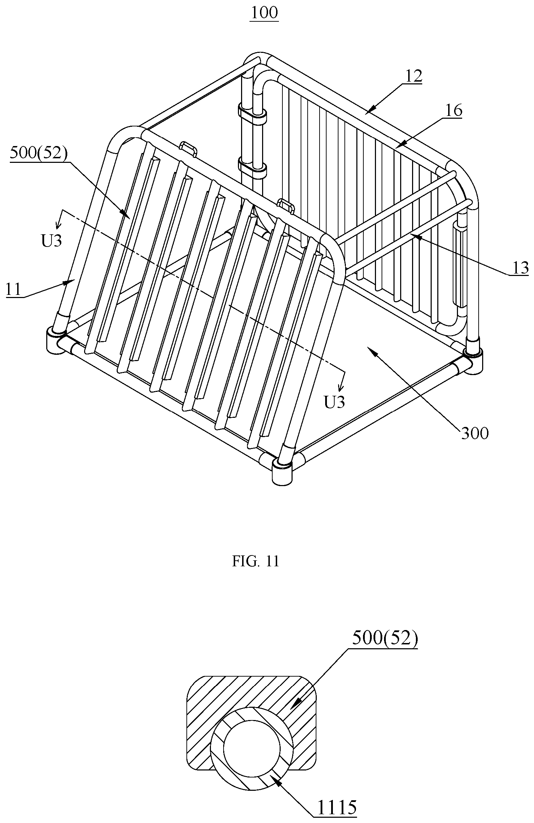

FIGS. 11 and 12 illustrate some exemplary embodiments of the cushioning structure 500 that includes a plurality of cushioning members 52. The plurality of cushioning members 52 are connected to the railings 1115 and incompletely cover the railings 1115 in a circumferential direction. Each cushioning member 52 may be made of a cushioning material and may be engaged with a corresponding railing 1115 by overmolding. Each cushioning member 52 faces the receiving space 300 and extends along the corresponding railing 1115. It will be appreciated that in some embodiments, the number of cushioning members 52 may be less than the number of railings 1115, and the cushioning members 52 may be provided only on one or two central railings 1115 since the central railings 1115 are hit by the pet with a high frequency.

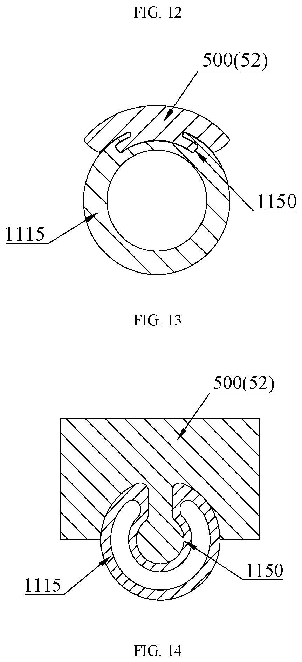

FIGS. 13 and 14 illustrates different variants of the cushioning member 52. In some embodiments, a peripheral wall of the railing 1115 is provided with a clamping groove 1150 that extends along the railing 1115. The cushioning member 52 can be integrally made of a cushioning material and engaged with the clamping groove 1150. In some embodiments not shown, the cushioning member 52 may include a mounting portion and a cushioning portion coupled together, the mounting portion and the clamping groove 1150 are snap-fitted, and the cushioning portion faces the receiving space 300 and is made of a cushioning material.

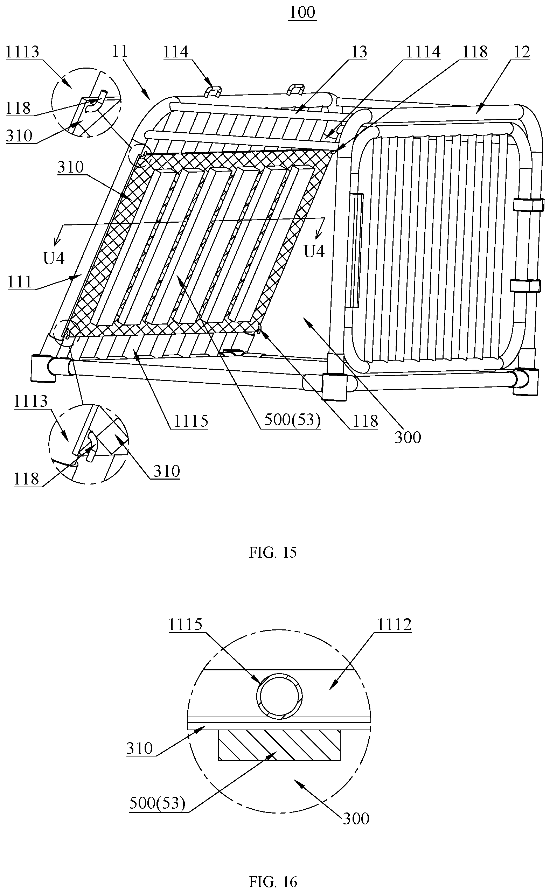

FIG. 15 illustrates some exemplary embodiments of the cushioning structure 500. In some embodiments, the receiving space 300 is provided with a separation net 310 attached to at least some of the railings 1115. The separation net 310 may be made of fabric or metal. Edges of the separation net 310 may, for example, be connected to the frame structure 100. In some embodiments, the separation net 310 is quadrilateral in shape, for example. Four engagement members 118 may be provided at the upper and lower portions of the left bar 1113 and the right bar 1114 of the first rectangular frame 111. The four engagement members 118 are connected to the separation net 310 at four corners of the separation net 310. In some embodiments, each engagement member 118 may be an engaging bolt. Of course, the connection between the separation net 310 and the frame structure 100 is not limited to the examples above.

Referring to FIGS. 15 and 16, the cushioning structure 500 is attached to the separation net 310, and the cushioning structure 500 faces the receiving space 300. In some embodiments, the cushioning structure 500 may include a plurality of cushioning strips 53 that correspond to at least some of the railings 1115 and extend along an extending direction of the corresponding railing, respectively. It will be appreciated that in some embodiments, the number of cushioning strips 53 may be less than the number of railings 1115, and the cushioning strips 53 may be provided corresponding to the central railings 1115 of the plurality of railings 1115 due to the high impact frequency of the central railings 1115 and the pet. The number of the cushioning strips 53 may be one or more.

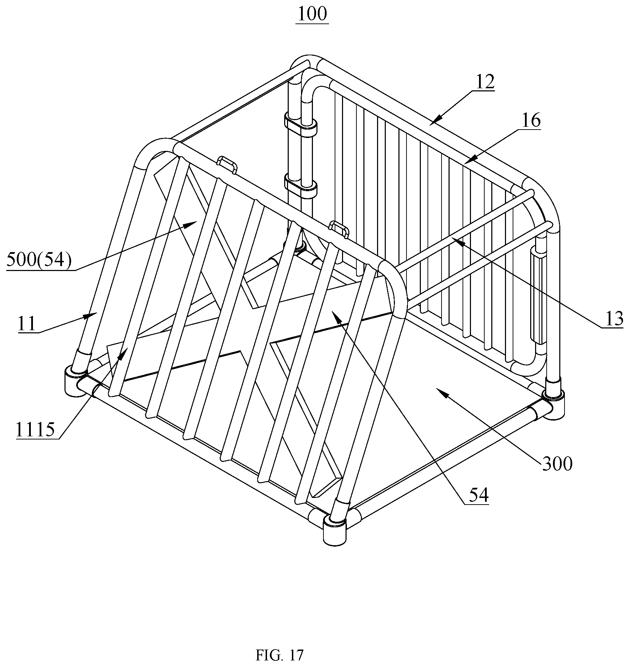

It should be noted that, although each cushioning strip 53 in FIG. 15 extends along the extending direction of the corresponding railing 1115, in some alternative embodiments, the extending direction of each cushioning strip 53 may not be parallel to the corresponding railing 1115. For example, each cushioning strip 53 may be attached to the separation net 310 by referring to the configuration of each cushioning strip 54 shown in FIGS. 17-19.

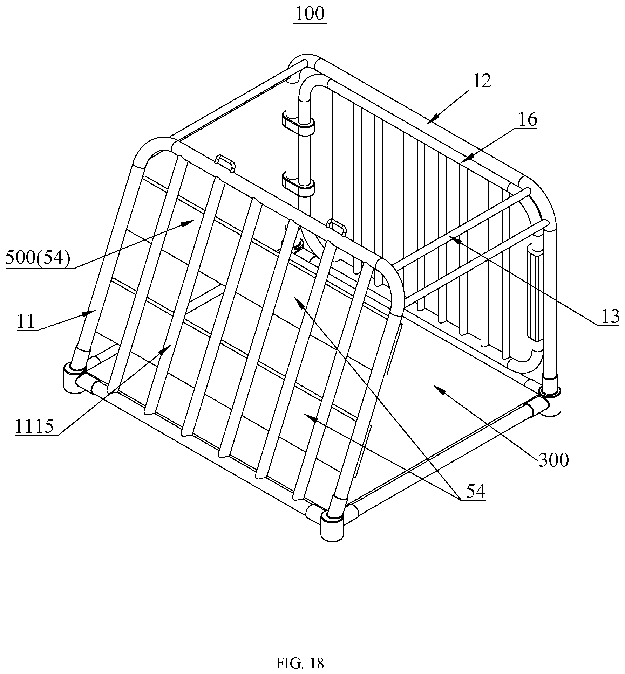

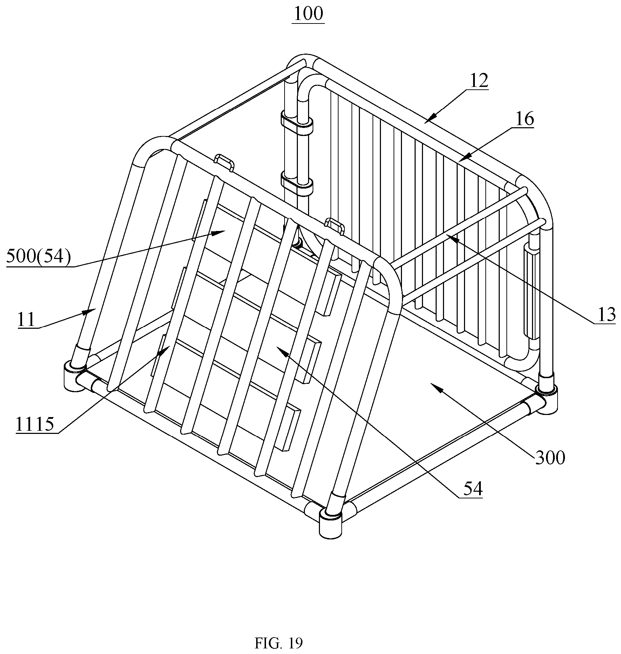

FIGS. 17-19 illustrate some exemplary embodiments of the cushioning structure 500. The cushioning structure 500 includes one cushioning strip 54, or two or more cushioning strips 54 directly attached to some or all of the railings 1115, the cushioning strips 54 are disposed across the railings 1115 to which they are attached. In FIG. 17, two cushioning strips 54 are intersected with each other. In FIG. 18, a plurality of cushioning strips 54 are provided at intervals in the extending direction of the railing 1115, and each of the cushioning strips 54 extends in a direction perpendicular to the railing 1115. In FIG. 19, the plurality of cushioning strips 54 are attached to one or more central railings of the plurality of railings 1115.

It should be noted that, although the cushioning structure 500 has been described above with reference to being provided on the railing 1115, it will be understood that the position of the cushioning structure 500 is not limited to the railing 1115, and in a case of no conflict, any bar of the frame structure 100 can be provided with the cushioning structure 500. It will be appreciated that the embodiments of each of the cushioning structures 500 described above may be readily applied to the railings 165 of the doorframe 16.

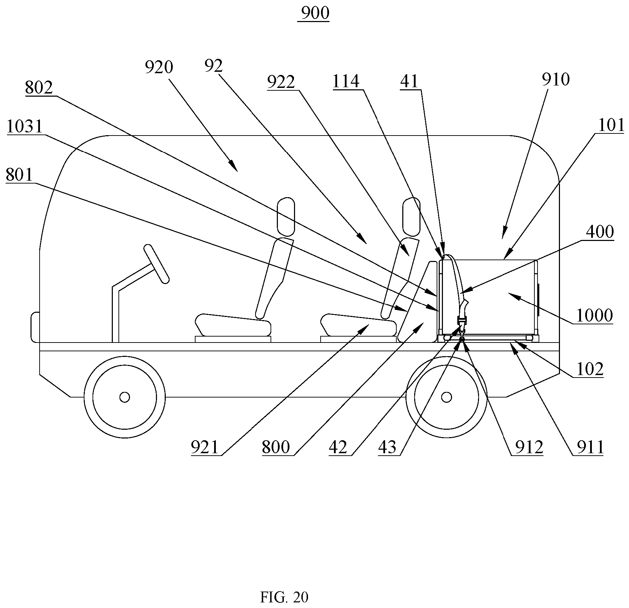

FIG. 20 illustrates a side view of a pet cage 1000 placed in the luggage compartment 910 of a vehicle 900 in accordance with some embodiments of the present application. The pet cage 1000 differs primarily from the pet cage 1000 above in that its front side 1031 can be a vertical plane and not inclined with respect to the bottom side 102. A cushioning body 800 may be provided between the front side 1031 of the pet cage 1000 and the backrest 922. A rear side 802 of the cushioning body 800 faces the front side 1031 of the pet cage 1000. A front side 801 of the cushioning body 800 is inclined rearwardly with respect to the bottom side of the cushioning body 800 and is spaced apart from the upper portion of the backrest 922. The cushioning body 800 can effectively prevent accidental forward folding of the backrest 922 and injury to the passenger caused by the pet cage 1000 directly striking the upper portion of the backrest 922.

The technical features of the above embodiments may be combined arbitrarily. To keep the description concise, not all possible combinations of the technical features in the above embodiments are described. However, as long as there is no contradiction in the combination of these technical features, they should be considered within the scope of this specification.

The above embodiments merely express several implementations of this application, and the descriptions are specific and detailed, but they should not be construed as limiting the scope of the patent. It should be noted that, for those of ordinary skill in the art, several modifications and improvements may be made without departing from the concept of this application, and these all fall within the protection scope of this application. Therefore, the protection scope of this patent shall be subject to the appended claims.

## Claims

1. A pet cage (1000), **characterized in that** the pet cage (1000) is connected to a first end (41) of at least one traction cable (400), and a second end (42) of the at least one traction cable (400) is provided with a connecting member (43) adapted to be connected to an anchoring point (912) provided in a luggage compartment (910) of a vehicle.

2. The pet cage (1000) according to claim 1, **characterized in that** the pet cage (1000) is connected to two traction cables (400); the first ends (41) of the two traction cables (400) are connected to the pet cage (1000) at a position close to a top side (101) of the pet cage (1000), and the second ends (42) of the two traction cables (400) extend downward or obliquely rearward along left and right sides of the pet cage (1000), respectively.

3. The pet cage (1000) according to claim 2, **characterized in that**:
the pet cage (1000) comprises a frame structure (100), the frame structure (100) comprises a front frame (11) and a rear frame (12) both having a substantially quadrilateral shape, and a plurality of links (13) connecting four corners of the front frame (11) to four corners of the rear frame (12), and the first ends (41) of the two traction cables (400) are connected to two of the plurality of links (13) close to the top side (101) of the pet cage (1000) respectively; or
the frame structure (100) comprises a front frame (11), the front frame (11) comprises a first rectangular frame (111), the first rectangular frame (111) comprises a top cross bar (1111), a bottom cross bar (1112), and a left bar (1113) and a right bar (1114) both connected between the top cross bar (1111) and the bottom cross bar (1112), and the first ends (41) of the two traction cables (400) are connected to left and right sides of the top cross bar (1111) respectively; or
the frame structure (100) comprises a front frame (11), the front frame (11) comprises a first rectangular frame (111), and the first rectangular frame (111) comprises a top cross bar (1111), a bottom cross bar (1112), and a left bar (1113) and a right bar (1114) both connected between the top cross bar (1111) and the bottom cross bar (1112), and the first ends (41) of the two traction cables (400) are connected to an upper portion of the left bar (1113) and an upper portion of the right bar (1114) respectively.

4. The pet cage (1000) according to claim 1, **characterized in that** the pet cage (1000) comprises a frame structure (100), the frame structure (100) is provided with at least one connecting base (114), and the at least one connecting base (114) is connected to the first end (41) of the at least one traction cable (400).

5. The pet cage (1000) according to claim 4, **characterized in that** the frame structure (100) comprises a front frame (11), the front frame (11) comprises a first rectangular frame (111), and the first rectangular frame (111) comprises a top cross bar (1111), a bottom cross bar (1112), and a left bar (1113) and a right bar (1114) both connected between the top cross bar (1111) and the bottom cross bar (1112), and the at least one connecting base (114) is fixed to the top cross bar (1111), and the connecting base (114) is bar-shaped and forms a closed loop with the top cross bar (1111).

6. The pet cage (1000) according to claim 1, **characterized in that**:
the pet cage (1000) comprises a bottom side (102), a top side (101), and a plurality of lateral sides (103) positioned between the bottom side (102) and the top side (101), and the bottom side (102), the top side (101), and the plurality of lateral sides (103) define a receiving space (300) of the pet cage; and
the plurality of lateral sides (103) comprise a front side (1031), and the front side (1031) is inclined rearwardly with respect to the bottom side (102).

7. The pet cage (1000) according to claim 6, **characterized in that** the plurality of lateral sides (103) further comprise a left side (1033) and a right side (1034), and the bottom side (102), the top side (101), the left side (1033), and the right side (1034) are covered by an enclosure (200).

8. The pet cage (1000) according to claim 6, **characterized in that** the plurality of lateral sides (103) comprise a rear side (1032), the rear side (1032) comprises a second rectangular frame (121) and a doorframe (16) connected to the second rectangular frame (121), one side of the doorframe (16) in a left-right direction is pivotably connected to the second rectangular frame (121), and another side of the doorframe (16) in the left-right direction is locked with the second rectangular frame (121) by a door lock (17).

9. The pet cage (1000) according to claim 1, **characterized in that**:
the pet cage (1000) comprises a bottom side (102), a top side (101), and a plurality of lateral sides (103) positioned between the bottom side (102) and the top side (101), and the bottom side, the top side, and the plurality of lateral sides (103) define a receiving space (300) of the pet cage; and
at least one of the bottom side (102), the top side (101), and the plurality of lateral sides (103) comprises a plurality of railings (1115), and at least some of the railings are provided with a cushioning structure (500) having a portion positioned in the receiving space (300).

10. The pet cage (1000) according to claim 9, **characterized in that** the cushioning structure (500) comprises a cushioning sleeve (51) surrounding at least some of the railings, and a wall thickness (W1) of a side of the cushioning sleeve (51) facing the receiving space (300) is greater than a wall thickness (W2) of a side of the cushioning sleeve (51) facing away from the receiving space (300).

11. The pet cage (1000) according to claim 9, **characterized in that** the cushioning structure (500) comprises a plurality of cushioning members (52), the plurality of cushioning members (52) correspond one-to-one to at least some of the railings (1115), and each of the plurality of cushioning members (52) incompletely covers the corresponding railing (1115) in a circumferential direction.

12. The pet cage (1000) according to claim 9, **characterized in that**: a peripheral wall of the railing (1115) is provided with a clamping groove (1150), and the cushioning structure (500) comprises a plurality of cushioning members (52); and the plurality of cushioning members (52) correspond one-to-one to at least some of the railings (1115), and each of the plurality of cushioning members (52) is integrally made of a cushioning material and is engaged with the corresponding clamping groove (1150).

13. The pet cage (1000) according to claim 9, **characterized in that** the receiving space (300) is provided with a separation net (310) attached to at least some of the railings, and the cushioning structure (500) is attached to the separation net (310).

14. The pet cage (1000) according to claim 13, **characterized in that** the cushioning structure (500) comprises a plurality of cushioning strips (53) corresponding to at least some of the railings (1115), and each of the plurality of cushioning strips (53) extends in an extension direction of the corresponding railing (1115) or intersects with the extension direction of the corresponding railing (1115).

15. The pet cage (1000) according to claim 13, **characterized in that**: the plurality of lateral sides (103) comprise a front side (1031); the front side (1031) comprises a front frame (11), and the front frame (11) comprises the plurality of railings (1115) and a first rectangular frame (111) positioned outside the plurality of railings (1115); and the first rectangular frame (111) comprises a top cross bar (1111), a bottom cross bar (1112), and a left bar (1113) and a right bar (1114) both connected between the top cross bar (1111) and the bottom cross bar (1112), and the left bar (1113) and the right bar (1114) are provided with an engagement member (118) connected to the separation net (310).

16. The pet cage (1000) according to claim 9, **characterized in that** the cushioning structure (500) comprises at least one cushioning strip (54) attached to at least some of the railings, and each of the cushioning strips (54) is intersected with the railing (1115) to which it is attached.

17. The pet cage (1000) according to claim 9, **characterized in that** the cushioning structure (500) comprises at least two cushioning strips (54) attached to at least some of the railings, and the two cushioning strips (54) correspond to at least some of the railings (1115) and are intersected with each other.

18. The pet cage (1000) according to claim 1, **characterized in that** the pet cage (1000) comprises a frame structure (100), the frame structure (100) comprises a plurality of metal tubes, and at least some of the metal tubes are provided with a cushioning structure (500) on a side facing the receiving space (300).
